# EUROPEAN PATENT SPECIFICATION

(11) **EP 3 766 746 B1**
(45) Date of publication and mention of the grant of the patent: **05.01.2022**
(21) Application number: 19186229.1
(22) Date of filing: 15.07.2019
(51) Int. Cl.: B60S 1/08, G01W 1/14, G01N 29/24, G01N 29/14, G01N 29/42, G01N 29/32, G01N 29/44

(54) **METHOD, DEVICE, COMPUTER PROGRAM AND COMPUTER PROGRAM PRODUCT FOR OPERATING A VEHICLE**
VERFAHREN, VORRICHTUNG, COMPUTERPROGRAMM UND COMPUTERPROGRAMMPRODUKT ZUM BETREIBEN EINES FAHRZEUGS
PROCÉDÉ, DISPOSITIF, PROGRAMME INFORMATIQUE ET PRODUIT-PROGRAMME D'ORDINATEUR POUR FAIRE FONCTIONNER UN VÉHICULE

(43) Date of publication of application: 20.01.2021
(73) Proprietor: Bayerische Motoren Werke Aktiengesellschaft, 80809 München (DE)
(72) Inventor: EICHHORN, Julian, Menlo Park, CA 94025 (US); MOK, Brian, Mountain View, CA 94043 (US); WANG, Wei, San Francisco, CA 94122 (US); SCHWALM, Maik, Menlo Park, CA 94025 (US); GREIN, Daniel, Novato, CA 94947 (US); KOSER, Iris, Mountain View, CA 94043 (US); ILIFFE-MOON, Etienne, Menlo Park, CA 94025 (US)

(56) References cited:
- DE-A1-102007 002 257
- JP-A- S5 945 249
- US-A1- 2005 016 275
- US-A1- 2005 017 666
- US-A1- 2008 099 042
- US-A1- 2013 145 839

## Description

### Method, device, computer program and computer program product for operating a vehicle

The invention relates to a method for operating a vehicle. The invention relates further to a device for operating a vehicle. The invention relates further to a computer program and computer program product for operating a vehicle.

A vehicle can comprise a rain sensor. Dependent of the rain sensor, wipers of a windshield of the vehicle can be switched on/off.

DE 10 2007 002 257 A1 discloses a window pane arrangement for detecting mechanical influences on the window pane, which has an extensive pressure sensitive section (3) with a several of individual pressure sensors arranged in an array. The pressure sensors are coupled with a detecting device. The detecting device detects an exact position of mechanical influences on one of the pressure sensors at any position of the pressure sensitive section, during occurrence of the mechanical influences. A display device is coupled with a control device for displaying of information on the window pane and/or in a passenger compartment.

The object of the invention is to contribute to a precise determination of a condition of the windshield of the vehicle. This object is achieved by the features of the independent claims. Advantageous embodiments of the invention are given in the dependent claims.

According to a first aspect the invention is distinguished by a method for operating a vehicle.

For operating a vehicle measurement data based on measurement signals from at least two piezo-electric sensors are provided. The at least two piezo-electric sensors are mechanically coupled to a windshield of the vehicle in a spaced apart manner. The at least two piezo-electric sensors are mechanically coupled to the windshield in such a way, that the measurement signals are representative of vibrations of the windshield. Condition data are determined dependent on the measurement data. The condition data is representative of a condition of the windshield.

The at least two piezo-electric sensors can sense the vibrations of the windshield and output corresponding electrical signals. The vibrations of the windshield may be gathered if the vehicle is static or moving.

By determining the condition data dependent on the measurement data based on the measurement signals from the at least two piezo-electric sensors, a condition of the windshield may be determined. For example, a vibration pattern may be determined according to the measurement data and used to determine the condition data, wherein the vibration pattern may be unique with a certain condition of the windshield. For example, this enables to distinguish a water droplet on the windshield from a snow flake on the windshield or the like.

Contrary to using a photo-electric sensor that measures a reflectivity in a small dedicated area of the windshield to determine the condition of the windshield, by using at least two piezo-electric sensors, it is possible to enable a triangulation based on the measurement data and thus a more precise determination of the condition data concerning a localisation with respect to the windshield.

Furthermore, by using at least two piezo-electric sensors, it is possible to provide a multi-dimensional input for the determination of the condition data, which is for example more robust regarding noise and/or interference or the like compared to a one dimensional input from a single sensor.

Thus, for example, it is possible to filter unwanted noise.

Contrary to using, for example, a single photo-electric sensor that measures a reflectivity in a small dedicated area of the windshield to provide statistical data for the whole windshield, by using at least two piezo-electric sensors it is possible to avoid an error, such as a false negative error and/or a false positive error. Such an error may be, for example, that wipers of the vehicle do not wipe, because a sensor area is still dry, while the rest of the windshield is wet, for example in sight-critical areas. By using at least two piezo-electric sensors, for example, an error involving one of the at least two sensors may be detected by the other sensors.

The term windshield may refer to the windshield as a whole and/or in part and/or the surface of the windshield, e.g. the term water on the windshield refers to water on the surface of the windshield. The windshield may be a front windshield of the vehicle and/or a rear screen and/or another window of the vehicle.

Mechanically coupled may comprise one or more of the following: glued and/or mounted and/or included or the like. The at least two piezo-electric sensors may be mechanically coupled to an inside and/or an outside of the windshield. For example, it is possible to mount a first piezo-electric sensor on the outside and a second piezo-electric sensor on the inside of the windshield.

The at least two piezo-electric sensors, for example, may be mechanically coupled to an area of the windshield that is not sight-critical for a driver of the vehicle, e.g. a corner of the windshield and/or near a rear-view mirror of the vehicle and/or along edges of the windshield.

The at least two piezo-electric sensors may be constructed in such a way that they do not influence a field of vision of the driver.

In a spaced apart manner may comprise a proper spacing between the at least two piezo-electric sensors, to enable a precise determination of the condition data possibly including triangulation based on the measurement data. For example, a spaced apart manner may refer to an area of the windshield in opposite corners of the windshield or the like.

The condition of the windshield may comprise multiple conditions of the windshield. The condition of the windshield may comprise one or more of the following: the water droplet on the windshield and/or the snow flake on the windshield and/or a hailstone hitting the windshield and/or a stone hitting the windshield and/or an insect hitting the windshield and/or air turbulences caused by dirt/friction on the windshield and/or sound from a wiper of the windshield or the like. The condition of the windshield may be determined dependent on the measurement data and/or additional data to enable a more precise determination. The additional data may comprise a wiper motor information and/or driving data or the like.

The method according to the first aspect further comprise operating the vehicle according to the condition data.

By operating the vehicle according to the condition data, it is possible to control one or more vehicle functions of the vehicle according to the condition data and/or to contribute to a safety of the vehicle.

For example, the operating the vehicle according to the condition data may comprise an automatic control of the wiper of the windshield or the like. The automatic control of the wiper may comprise switching on the wiper and/or switching off the wiper and/or changing the frequency of wiping or the like. The term wiper may refer to one or more wipers of windshield of the vehicle.

For example, the operating the vehicle according to the condition data may comprise an automatic control of one or more washer nozzles of the windshield. The automatic control of the one or more washer nozzles may comprise switching on the washer nozzles and/or switching off the washer nozzles or the like.

For example, the operating the vehicle according to the condition data may comprise providing the driver information to a driver of the vehicle according to the condition data.

By providing the driver information, it is possible to warn and/or inform the driver about the condition of the windshield or the like.

For example, the providing the driver information may comprise providing the driver information on a user interface of the vehicle. For example, the user interface may be a display and/or touch display in a front console of the vehicle or the like.

For example, the operating the vehicle according to the condition data may comprise controlling and/or operating and/or modifying a driving function of the vehicle according to the condition data, e.g. modifying a behaviour of an automatic driving assistant and/or modifying a behaviour of an autopilot or the like.

Determining the condition data comprises applying artificial intelligence.

Thus, it is possible to precisely assess and/or locate the vibrations of the windshield, as well as to react to the vibrations of the windshield.

Applying artificial intelligence may comprise a neural network and/or machine learning algorithms and/or training methods for artificial intelligence or the like.

The artificial intelligence may be different for a type of a vehicle, e.g. a truck or a limousine, and/or may be different for a model of a vehicle and/or may be different for various speeds of the vehicle or the like.

For example, the artificial intelligence may be trained. This may include that it is pre-trained, in particular during development of the vehicle. This may additionally or alternatively include that the artificial intelligence may be adaptively trained during operation of the vehicle, in particular in order to operate the vehicle according to the condition data, e.g. the automatic control of the wiper and/or the automatic control of the washer nozzles or the like. For example, one or more actions of the driver in certain situations, e.g. turning on the wipers during rain, may be used as feedback information for the adaptive training.

Furthermore, the feedback information and/or information about the adaptive training may be sent to a database external to the vehicle, e.g. a back-end server. Thus it is possible, to enable crowd-based improvement, such as artificial intelligence of another vehicle.

For example, the artificial intelligence may be trained in order to determine vibration patterns of the vibrations of the windshield and/or to filter unwanted noise according to the measurement data and/or the speed data and/or the noise data or the like.

The artificial intelligence is trained to filter out noise of the measurement signals being non-representative of the conditions of the windshield.

Thus, it is possible to enable a more precise determination of the condition data by, for example, filtering out unwanted noise and/or filtering out the vibrations of the windshield based on noise of the measurement signals. For example, thus it is possible to filter out vibrations of the windshield caused by one or more items hitting the vehicle in other places than the windshield, e.g. a stone hitting a rooftop of the vehicle or the like.

According to one embodiment speed data are provided. The speed data are representative of a speed of the vehicle and have a temporal relation to the measurement data. The condition data are determined dependent on the speed data.

By using the additional data, such as the speed data, it is possible to enable a more precise determination of the condition data. For example, aerodynamics of the windshield, such as an aerodynamic flow or the like, and/or the vibrations of the windshield may change according to the speed of the vehicle, when the vehicle is moving compared to if the vehicle is static. Thus, for example, the vibration pattern that may be determined according to the measurement data and/or the speed data and used to determine the condition information may change with the speed of the vehicle.

The temporal relation refers to, for example, a same time and/or time range or the like. For example, if the measurement data are based on measurement signals from the at least two piezo-electric sensors during a time range A, then the speed data may be representative of the speed of the vehicle during the time range A.

For example, the condition data are determined dependent on the measurement data and/or the speed data.

According to a further embodiment noise data of the vehicle are provided. The noise data of the vehicle are non-representative of the conditions of the windshield and have a temporal relation to the measurement data. The condition data are determined dependent on the noise data.

By using the additional data, such as the noise data, it is possible to enable a more precise determination of the condition data. For example, the vibrations of the windshield may change according to the noise data. Thus, for example, the vibration pattern that may be determined according to the measurement data and/or the speed data and/or the noise data and used to determine the condition information may change.

The temporal relation refers to, for example, the same time and/or time range or the like. For example, if the measurement data are based on measurement signals from the at least two piezo-electric sensors during a time range A, then the noise data may be non-representative of the conditions of the windshield during the time range A.

For example, the condition data are determined dependent on the measurement data and/or the speed data and /or the noise data or an arbitrary combination of the three.

According to a further embodiment the noise data are based on vehicle internal sound data.

Thus, it is possible to distinguish the vibrations of the windshield based on the aerodynamics or the like and the vibrations of the windshield based on vehicle internal sound, e.g. when the windshield acts as a resonator.

According to a further embodiment the vehicle internal sound data are representative of sound generated by an entertainment system of the vehicle.

Thus, it is possible to distinguish the vibrations of the windshield based on the aerodynamics or the like and the vibrations of the windshield based on the sound generated by an entertainment system of the vehicle.

For example, if the driver listens to loud music or the like, the influence on the vibrations of the windshield may be in particular significant.

According to a further embodiment the noise data are based on road condition data. The road condition data are representative of a condition of an underground that the vehicle is moving on.

Thus, it is possible to distinguish the vibrations of the windshield based on the aerodynamics and the vibrations of the windshield based on the condition of the underground that the vehicle is moving on.

The condition of the underground that the vehicle is moving on may comprise multiple conditions of the underground that the vehicle is moving on. The condition of the underground that the vehicle is moving on may comprise one or more of the following: an underground surface, such as a slope and/or gravel and/or asphalt and/or cobble stones and/or water on the underground and/or snow on the underground and/or ice on the underground or the like, and/or a pothole on the underground and/or a bump on the underground or the like.

According to a further embodiment the artificial intelligence is trained to filter out the noise of the measurement signals caused by vehicle internal sound

Thus, it is possible to filter out the vibrations of the windshield based on the noise of the measurement signals based on vehicle internal sound.

According to a further embodiment the noise of the measurement signals caused by vehicle internal sound is representative of the sound generated by the entertainment system of the vehicle.

Thus, it is possible to filter out the vibrations of the windshield based on the noise of the measurement signals based on the sound generated by an entertainment system of the vehicle. Thus, it is possible to distinguish the vibrations of the windshield caused by the sound generated by the entertainment system from, for example, the vibrations of the windshield caused by the water droplet on the windshield or the like

According to a further embodiment the artificial intelligence is trained to filter out the noise of the measurement signals caused by a road condition. The road condition is representative of the condition of an underground that the vehicle is moving on.

Thus, it is possible to filter out the vibrations of the windshield based on the noise of the measurement signals based on the road condition.

The road condition may comprise multiple road conditions. The road condition may comprise one or more of the following: a road surface, such as a slope and/or gravel and/or asphalt and/or cobble stones and/or water on the road and/or snow on the road and/or ice on the road or the like, and/or a pothole on the road and/or a bump on the road and/or a puddle on the road or the like.

According to a further embodiment the artificial intelligence is trained to determine the condition data in such a way, that they comprise information about one or more impacts on the windshield and/or a cleanliness of a surface of the windshield and/or a friction of the surface of the windshield and/or a wear of a wiper of the windshield.

The information about the one or more impacts on the windshield may be representative of one or more objects hitting the windshield, e.g. the water droplet and/or the snow flake and/or the hailstone and/or the stone and/or the insect or the like. The information about the one or more impacts on the windshield may comprise an information about a location of the impacts and/or a quantity of the impacts and/or a quality of the impacts. For example, thirty rain drops may be detected in an area of the windshield in the center of the windshield in a specified time, wherein a size of the rain drops may be assessed. The information about the location of the impacts may be a precise location.

The information about the cleanliness of the surface may be representative of conditions that influence the field of vision of the driver, e.g. mud and/or dirt and/or ice and/or oil and/or insects or the like.

The information about the friction of the surface may be representative of conditions that influence the aerodynamics of the windshield and/or the vehicle, e.g. mud and/or dirt and/or ice and/or rain or the like.

The information about the wear of the wiper may comprise information about the wear of multiple wipers of the windshield. The information about the wear of the wiper may be representative of an ability to clean the windshield as compared to a new wiper or the like.

Thus, it is possible precisely determine the condition data. Furthermore, thus it may be possible to contribute to the safety of the vehicle. By operating the vehicle according to the information about one or more impacts on the windshield, a structural damage of the windshield and/or the vehicle may be prevented. For example, if one or more stones hit the windshield, significant structural damage may be possible immediately or during a following time period. Thus, if the driver is provided, for example, with a warning information on the the user interface, such consequences may be avoided.

Furthermore, thus, it is possible to precisely assess and/or locate the condition of the windshield. For example, it may be possible to exactly determine a single piece of dirt and/or a dirty area of an arbitrary size.

The information about one or more impacts on the windshield and/or a cleanliness of a surface of the windshield and/or a friction of the surface of the windshield and/or a wear of a wiper of the windshield, for example, may be provided as a percentage value between zero and hundred percent. Zero percent referring to a poor condition, e.g. zero percent of cleanliness of the surface of the windshield may be regarded as a dirty surface of the windshield and hundred percent of cleanliness of the surface of the windshield may be regarded as a clean surface of the windshield.

The information about one or more impacts on the windshield and/or a cleanliness of a surface of the windshield and/or a friction of the surface of the windshield and/or a wear of a wiper of the windshield and/or part of the information about one or more impacts on the windshield and/or a cleanliness of a surface of the windshield and/or a friction of the surface of the windshield and/or a wear of a wiper of the windshield may be comprised in the driver information or the like.

According to a further embodiment an information is provided to a database external to the vehicle. The information is provided according to the condition data. The information comprises a location information which has a temporal relation to the measurement data.

The database external to the vehicle may comprise multiple databases external to the vehicle. The database external to the vehicle may comprise one or more of the following: one or more back-end servers for a vehicle fleet, wherein the vehicle may or may not be part of the vehicle fleet, and/or one or more map providers and/or one or more municipal services. By providing the information to the municipal service it is possible, for example to control dynamic speed signs on a street/road and/or dynamic warning signs on the street/road and/or to initiate pothole repair and/or initiate snow clearing or the like.

The location information may be, for example, a geotag. For example, the location information may be provided dependent on a GNSS position information provided by a GNSS device of the vehicle.

The temporal relation refers to, for example, a same time and/or time range or the like. For example, if the measurement data are based on measurement signals from the at least two piezo-electric sensors during a time range A, then the location information may be representative of one or more GNSS position information provided by the GNSS device of the vehicle during the time range A.

According to a further embodiment the measurement data are provided based on measurement signals from at least four piezo-electric sensors. Four of the at least four piezo-electric sensors are respectively mechanically coupled to an area of the windshield in corners of the windshield.

By determining the condition data dependent on the measurement data based on the measurement signals from the at least four piezo-electric sensors, a condition of the windshield may be determined more precisely. For example, by using the at least four piezo-electric sensors, it is possible to enable a more precise triangulation based on the measurement data and thus a more precise determination of the condition data. Furthermore, by using at least four piezo-electric sensors, it is possible to provide a multi-dimensional input for the determination of the condition data.

According to a second aspect the invention is distinguished by a device for operating a vehicle, wherein the device is designed to execute the method for operating a vehicle or an embodiment of the method according to the first aspect.

According to a further aspect the invention is distinguished by a computer program for operating a vehicle, wherein the computer program is designed to execute the method for operating a vehicle or an embodiment of the method by its execution on a data processing device.

According to a further aspect the invention is distinguished by a computer program product comprising executable program code, wherein the program code executes the method for operating a vehicle or an embodiment of the method by execution on a data processing device.

The computer program product may comprise a medium which is readable by the data processing device and on which the program code is saved.

Embodiments of the first aspect may also be present for the other aspects and show corresponding effects.

Exemplary embodiments of the invention are explained in the following with the aid of a schematic drawing.

This is as follows:
Figure 1 a schematic drawing of a first embodiment of a vehicle,
Figure 2 a schematic drawing of a second embodiment of a vehicle,
Figure 3 a schematic drawing of a third embodiment of a vehicle,
Figure 4 a schematic drawing of a vehicle, according to one of the first to third or another embodiment, and
Figure 5 a flowchart of a program for operating a vehicle.

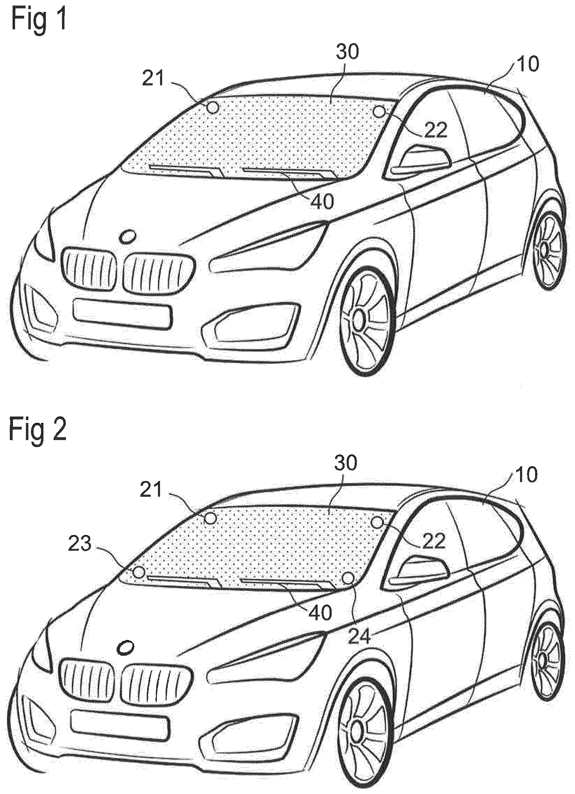

Figure 1 shows a schematic drawing of a first embodiment of a vehicle 10. According to the first embodiment, the vehicle 10 comprises two piezo-electric sensors 21, 22, a windshield 30 and a wiper 40. The piezo-electric sensor 21 is mechanically coupled to an area of the windshield 30 in a top right corner of the windshield 30. The piezo-electric sensor 22 is mechanically coupled to an area of the windshield 30 in a top left corner of the windshield 30. The two piezo-electric sensors 21, 22, may provide measurement signals. The two piezo-electric sensors 21, 22 are mechanically coupled to the windshield 30 in such a way, that the measurement signals are representative of vibrations of the windshield 30. Measurement data MD may be provided based on the measurement signals from the two piezo-electric sensors 21, 22.

Figure 2 shows a schematic drawing of a second embodiment of a vehicle 10. According to the second embodiment, the vehicle 10 comprises four piezo-electric sensors 21, 22, 23, 24, a windshield 30 and a wiper 40. The piezo-electric sensor 21 is mechanically coupled to an area of the windshield 30 in a top right corner of the windshield 30. The piezo-electric sensor 22 is mechanically coupled to an area of the windshield 30 in a top left corner of the windshield 30. The piezo-electric sensor 23 is mechanically coupled to an area of the windshield 30 in a bottom right corner of the windshield 30. The piezo-electric sensor 24 is mechanically coupled to an area of the windshield 30 in a bottom left corner of the windshield 30.

The four piezo-electric sensors 21, 22, 23, 24 may provide measurement signals. The four piezo-electric sensors 21, 22, 23, 24 are mechanically coupled to the windshield 30 in such a way, that the measurement signals are representative of vibrations of the windshield 30. Measurement data MD may be provided based on the measurement signals from the four piezo-electric sensors 21, 22, 23, 24.

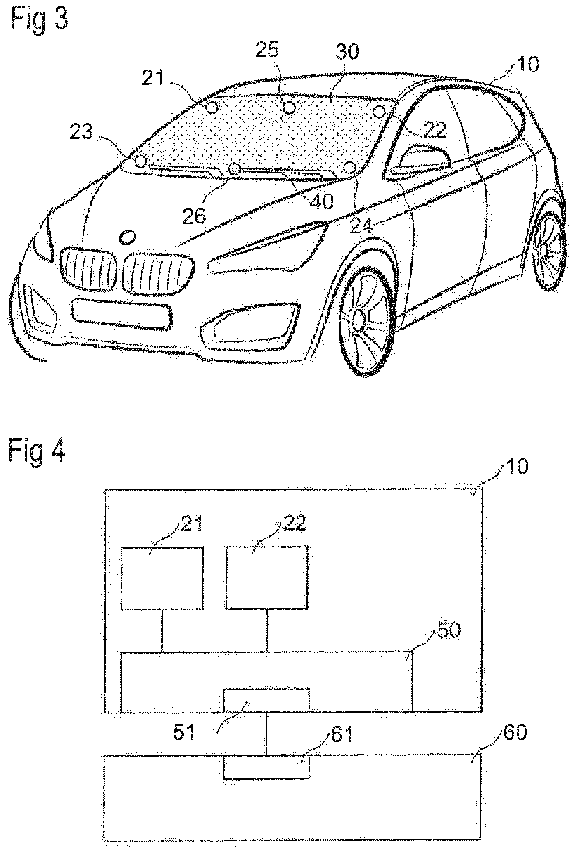

Figure 3 shows a schematic drawing of a third embodiment of a vehicle 10. According to the third embodiment, the vehicle 10 comprises six piezo-electric sensors 21, 22, 23, 24, 25, 26, a windshield 30 and a wiper 40. The piezo-electric sensor 21 is mechanically coupled to an area of the windshield 30 in a top right corner of the windshield 30. The piezo-electric sensor 22 is mechanically coupled to an area of the windshield 30 in a top left corner of the windshield 30. The piezo-electric sensor 23 is mechanically coupled to an area of the windshield 30 in a bottom right corner of the windshield 30. The piezo-electric sensor 24 is mechanically coupled to an area of the windshield 30 in a bottom left corner of the windshield 30.

The piezo-electric sensor 25 is mechanically coupled to an area of the windshield 30 near a rear-view mirror of the vehicle 10. The piezo-electric sensor 26 is mechanically coupled to an area of the windshield 30 along the bottom edge of the windshield 30 below the rear-view mirror. The six piezo-electric sensors 21, 22, 23, 24, 25, 26 may provide measurement signals. The six piezo-electric sensors 21, 22, 23, 24, 25, 26 are mechanically coupled to the windshield 30 in such a way, that the measurement signals are representative of vibrations of the windshield 30. Measurement data MD may be provided based on the measurement signals from the six piezo-electric sensors 21, 22, 23, 24, 25, 26.

Figure 4 shows a schematic drawing of the vehicle 10, according to one of the first to third or another embodiment. The vehicle 10 comprises at least two piezo-electric sensors 21, 22 and a device 50 for operating the vehicle 10. The device 50 comprises a first communication interface 51 which is configured to provide information external to the first communication interface 51. According to the fourth embodiment, a database 60 external to the vehicle 10 comprises a second communication interface 61 which is configured to receive information from the first communication interface 51. For example, the database 60 may be a back-end server for a vehicle fleet, wherein the vehicle 10 may or may not be part of the vehicle fleet, and/or a map provider and/or a municipal service.

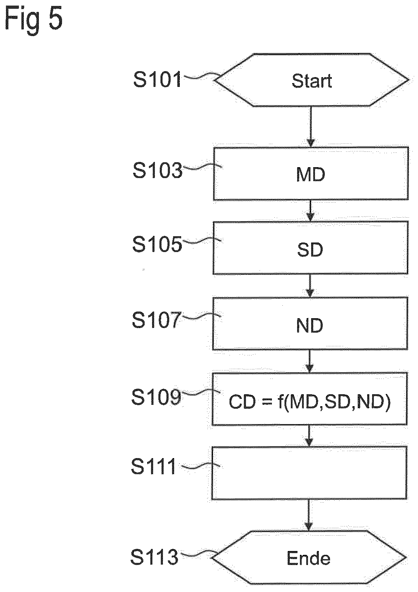

Figure 5 shows a flowchart of a program for operating the vehicle 10. The program can be stored in a program and/or data memory and can be processed by a computing unit. For example, the device 50 may comprise the program and/or data memory and the computing unit which executes the program for operating a vehicle 10. The device 50 may comprise one or more communication interfaces.

In a step S101 the program is started and, for example, variables are initialized.

The program is continued in a step S103. In the step S103 measurement data MD based on measurement signals from at least two piezo-electric sensors 21, 22 are provided.

The program is continued in a step S105. In the step S105 speed data SD are provided. The speed data SD are representative of a speed of the vehicle 10 and have a temporal relation to the measurement data MD.

The program is continued in a step S107. In the step S107 noise data ND of the vehicle 10 are provided. The noise data ND of the vehicle are non-representative of the conditions of the windshield 30 and have a temporal relation to the measurement data MD.

Optionally, in the step 107, the noise data ND are based on vehicle internal sound data.

Optionally, in the step 107, the vehicle internal sound data are representative of sound generated by an entertainment system of the vehicle 10.

Optionally, in the step 107, the noise data ND are based on road condition data. The road condition data are representative of a condition of an underground that the vehicle 10 is moving on.

The program is continued in a step S109. In the step S109 condition data CD are determined dependent on the measurement data MD. The condition data CD is representative of a condition of the windshield 30.

Optionally, in the step 109, the condition data CD are determined dependent on the speed data SD.

Optionally, in the step 109, the condition data CD are determined dependent on the noise data ND.

In the step 109, determining the condition data CD comprises applying artificial intelligence.

In the step 109, the artificial intelligence is trained to filter out noise of the measurement signals being non-representative of the conditions of the windshield 30. Optionally, in the step 109, the artificial intelligence is trained to filter out the noise of the measurement signals caused by vehicle internal sound.

Optionally, in the step 109, the noise of the measurement signals caused by vehicle internal sound is representative of the sound generated by the entertainment system of the vehicle 10.

Optionally, in the step 109, the artificial intelligence is trained to filter out the noise of the measurement signals caused by a road condition. The road condition is representative of the condition of an underground that the vehicle 10 is moving on.

Optionally, in the step 109, the artificial intelligence is trained to determine the condition data CD in such a way, that they comprise information about one or more impacts on the windshield 30 and/or a cleanliness of a surface of the windshield 30 and/or a friction of the surface of the windshield 30 and/or a wear of a wiper 40 of the windshield 30.

The program is continued in a step Sill. In the step Sill an information is provided to a database 60 external to the vehicle 10. The information is provided according to the condition data CD. The information comprises a location information which has a temporal relation to the measurement data MD.

In a step S113 the program is stopped and can be started again in the step S1.

## Claims

1. Method for operating a vehicle (10) comprising
- providing measurement data (MD) based on measurement signals from at least two piezo-electric sensors (21, 22) mechanically coupled to a windshield (30) of the vehicle (10) in a spaced apart manner, wherein the at least two piezo-electric sensors (21, 22) are mechanically coupled to the windshield (30) in such a way, that the measurement signals are representative of vibrations of the windshield (30),
- determining condition data (CD) dependent on the measurement data (MD), the condition data (CD) being representative of a condition of the windshield (30) and
- operating the vehicle according to the condition data
, **characterized in that**
determining the condition data (CD) comprises applying artificial intelligence, and the artificial intelligence is trained to filter out noise of the measurement signals being non-representative of the conditions of the windshield (30).

2. Method according to claim 1, wherein the method comprises
- providing speed data (SD) which are representative of a speed of the vehicle (10) and have a temporal relation to the measurement data (MD), and
- determining the condition data (CD) dependent on the speed data (SD).

3. Method according to the previous claims, wherein the method comprises
- providing noise data (ND) of the vehicle (10) which are non-representative of the conditions of the windshield (30) and have a temporal relation to the measurement data (MD), and
- determining the condition data (CD) dependent on the noise data (ND).

4. Method according to claim 3, wherein the noise data (ND) are based on vehicle internal sound data.

5. Method according to claim 4, wherein the vehicle internal sound data are representative of sound generated by an entertainment system of the vehicle (10).

6. Method according to claim 3, wherein the noise data (ND) are based on road condition data which are representative of a condition of an underground that the vehicle (10) is moving on.

7. Method according to claim 1, wherein the artificial intelligence is trained to filter out the noise of the measurement signals caused by vehicle internal sound.

8. Method according to claim 7, wherein the noise of the measurement signals caused by the vehicle internal sound is representative of the sound generated by the entertainment system of the vehicle (10).

9. Method according to claim 1, wherein the artificial intelligence is trained to filter out the noise of the measurement signals caused by a road condition being representative of the condition of an underground that the vehicle (10) is moving on.

10. Method according to any one of claims 1 to 9, wherein the artificial intelligence is trained to determine the condition data (CD) in such a way, that they comprise information about one or more impacts on the windshield (30) and/or a cleanliness of a surface of the windshield (30) and/or a friction of the surface of the windshield (30) and/or a wear of a wiper (40) of the windshield (30).

11. Method according to the previous claims, wherein the method comprises providing an information to a database (60) external to the vehicle (10) according to the condition data (CD), wherein the information comprises a location information which has a temporal relation to the measurement data (MD).

12. Method according to the previous claims, wherein the method comprises providing the measurement data (MD) based on measurement signals from at least four piezo-electric sensors (21, 22, 23, 24), four of the at least four piezo-electric sensors (21, 22, 23, 24) being respectively mechanically coupled to an area of the windshield (30) in corners of the windshield (30).

13. Device (50) for operating a vehicle (10) comprising at least two piezo-electric sensors (21, 22) mechanically coupled to a windshield of the vehicle in a spaced apart manner, wherein the at least two piezo-electric sensors (21, 22) are mechanically coupled to the windshield in such a way, that the measurement signals are representative of vibrations of the windshield, wherein the device (50) is designed to execute the method according to anyone of the claims 1 to 12.

14. Computer program for operating a vehicle (10) comprising instructions to cause the device of claim 13 to execute the steps of the method according to anyone of the claims 1 to 12 by its execution on a data processing device.

15. Computer program product comprising executable program code, wherein the program code executes instructions to cause the device of claim 13 to execute the steps of the method according to anyone of the claims 1 to 12 by execution on a data processing device.

## Patentansprüche

1. Verfahren zum Betreiben eines Fahrzeugs (10), das umfasst
- Bereitstellen von Messdaten (MD) basierend auf Messsignalen von mindestens zwei piezo-elektrischen Sensoren (21, 22), die mit einer Windschutzscheibe (30) des Fahrzeugs (10) in einer beabstandeten Weise mechanisch gekoppelt sind, wobei die mindestens zwei piezo-elektrischen Sensoren (21, 22) mit der Windschutzscheibe (30) derart mechanisch gekoppelt sind, dass die Messsignale repräsentativ für Vibrationen der Windschutzscheibe (30) sind,
- Bestimmen von Zustandsdaten (CD) in Abhängigkeit von den Messdaten (MD), wobei die Zustandsdaten (CD) repräsentativ für einen Zustand der Windschutzscheibe (30) sind, und
- Betreiben des Fahrzeugs gemäß den Zustandsdaten, **dadurch gekennzeichnet, dass**
das Bestimmen der Zustandsdaten (CD) Anwenden von künstlicher Intelligenz umfasst, und die künstliche Intelligenz trainiert ist, ein Geräusch der Messsignale herauszufiltern, das nicht repräsentativ für die Zustände der Windschutzscheibe (30) sind.

2. Verfahren nach Anspruch 1, wobei das Verfahren umfasst
- Bereitstellen von Geschwindigkeitsdaten (SD), die repräsentativ für eine Geschwindigkeit des Fahrzeugs (10) sind und einen zeitlichen Bezug zu den Messdaten (MD) aufweisen, und
- Bestimmen der Zustandsdaten (CD) in Abhängigkeit von den Geschwindigkeitsdaten (SD).

3. Verfahren nach den vorhergehenden Ansprüchen, wobei das Verfahren umfasst
- Bereitstellen von Geräuschdaten (ND) des Fahrzeugs (10), die nicht repräsentativ für die Zustände der Windschutzscheibe (30) sind und einen zeitlichen Bezug zu den Messdaten (MD) aufweisen, und
- Bestimmen der Zustandsdaten (CD) in Abhängigkeit von den Geräuschdaten (ND).

4. Verfahren nach Anspruch 3, wobei die Geräuschdaten (ND) auf fahrzeuginternen Schalldaten basieren.

5. Verfahren nach Anspruch 4, wobei die fahrzeuginternen Schalldaten repräsentativ für durch ein Unterhaltungssystem des Fahrzeugs (10) erzeugten Schall sind.

6. Verfahren nach Anspruch 3, wobei die Geräuschdaten (ND) auf Straßenzustandsdaten basieren, die repräsentativ für einen Zustand eines Untergrunds sind, auf dem sich das Fahrzeug (10) bewegt.

7. Verfahren nach Anspruch 1, wobei die künstliche Intelligenz trainiert ist, das Geräusch der Messsignale herauszufiltern, das durch fahrzeuginternen Schall verursacht wird.

8. Verfahren nach Anspruch 7, wobei das Geräusch der Messsignale, das durch den fahrzeuginternen Schall verursacht wird, repräsentativ für den Schall ist, der durch das Unterhaltungssystem des Fahrzeugs (10) erzeugt wird.

9. Verfahren nach Anspruch 1, wobei die künstliche Intelligenz trainiert ist, das Geräusch der Messsignale herauszufiltern, das durch einen Straßenzustand verursacht wird, der repräsentativ für den Zustand eines Untergrunds ist, auf dem sich das Fahrzeug (10) bewegt.

10. Verfahren nach einem der Ansprüche 1 bis 9, wobei die künstliche Intelligenz trainiert ist, die Zustandsdaten (CD) derart zu bestimmen, dass sie eine Information über einen oder mehrere Aufprälle auf die Windschutzscheibe (30) und/oder eine Sauberkeit einer Oberfläche der Windschutzscheibe (30) und/oder eine Reibung der Oberfläche der Windschutzscheibe (30) und/oder einen Verschleiß eines Scheibenwischers (40) der Windschutzscheibe (30) umfassen.

11. Verfahren nach den vorhergehenden Ansprüchen, wobei das Verfahren Bereitstellen einer Information zu einer Datenbank (60) extern zu dem Fahrzeug (10) gemäß den Zustandsdaten (CD) umfasst, wobei die Information eine Ortsinformation umfasst, die einen zeitlichen Bezug zu den Messdaten (MD) aufweist.

12. Verfahren nach den vorhergehenden Ansprüchen, wobei das Verfahren Bereitstellen der Messdaten (MD) basierend auf Messsignalen von mindestens vier piezo-elektrischen Sensoren (21, 22, 23, 24) umfasst, wobei vier der mindestens vier piezo-elektrischen Sensoren (21, 22, 23, 24) jeweils mit einem Bereich der Windschutzscheibe (30) in Ecken der Windschutzscheibe (30) mechanisch gekoppelt sind.

13. Vorrichtung (50) zum Betreiben eines Fahrzeugs (10), umfassend mindestens zwei piezo-elektrische Sensoren (21, 22), die mit einer Windschutzscheibe des Fahrzeugs in einer beabstandeten Weise mechanisch gekoppelt sind, wobei die mindestens zwei piezo-elektrischen Sensoren (21, 22) mit der Windschutzscheibe derart mechanisch gekoppelt sind, dass die Messsignale repräsentativ für Vibrationen der Windschutzscheibe sind, wobei die Vorrichtung (50) konzipiert ist, das Verfahren nach einem der Ansprüche 1 bis 12 auszuführen.

14. Computerprogramm zum Betreiben eines Fahrzeugs (10), umfassend Anweisungen zum Veranlassen der Vorrichtung nach Anspruch 13, die Schritte des Verfahrens nach einem der Ansprüche 1 bis 12 durch seine Ausführung auf einer Datenverarbeitungsvorrichtung auszuführen.

15. Computerprogrammprodukt, das ausführbaren Programmcode umfasst, wobei der Programmcode Anweisungen zum Veranlassen der Vorrichtung nach Anspruch 13 ausführt, die Schritte des Verfahrens nach einem der Ansprüche 1 bis 12 durch Ausführung auf einer Datenverarbeitungsvorrichtung auszuführen.

## Revendications

1. Procédé pour faire fonctionner un véhicule (10), comprenant
- la fourniture de données de mesure (MD) sur la base de signaux de mesure provenant d'au moins deux capteurs piézo-électriques (21, 22) mécaniquement couplés à un pare-brise (30) du véhicule (10) de manière espacée l'un de l'autre, dans lequel les au moins deux capteurs piézo-électriques (21, 22) sont mécaniquement couplés au pare-brise (30) de manière telle que les signaux de mesure soient représentatifs de vibrations du pare-brise (30),
- la détermination de données de condition (CD) en fonction des données de mesure (MD), les données de condition (CD) étant représentatives d'une condition du pare-brise (30), et
- le fonctionnement du véhicule selon les données de condition,
**caractérisé en ce que**
la détermination des données de condition (CD) comprend l'application d'intelligence artificielle, et l'intelligence artificielle fait l'objet d'un apprentissage pour éliminer par filtrage un bruit des signaux de mesure non représentatif des conditions du pare-brise (30).

2. Procédé selon la revendication 1, dans lequel le procédé comprend
- la fourniture de données de vitesse (SD) qui sont représentatives d'une vitesse du véhicule (10) et ont une relation temporelle par rapport aux données de mesure (MD), et
- la détermination des données de condition (CD) en fonction des données de vitesse (SD).

3. Procédé selon les revendications précédentes, dans lequel le procédé comprend
- la fourniture de données de bruit (ND) du véhicule (10) qui sont non représentatives des conditions du pare-brise (30) et ont une relation temporelle par rapport aux données de mesure (MD), et
- la détermination des données de condition (CD) en fonction des données de bruit (ND).

4. Procédé selon la revendication 3, dans lequel les données de bruit (ND) sont sur la base de données de son interne de véhicule.

5. Procédé selon la revendication 4, dans lequel les données de son interne de véhicule sont représentatives d'un son générées par un système de divertissement du véhicule (10).

6. Procédé selon la revendication 3, dans lequel les données de bruit (ND) sont sur la base de données de condition de route qui sont représentatives d'une condition d'un sous-sol sur lequel le véhicule (10) est en mouvement.

7. Procédé selon la revendication 1, dans lequel l'intelligence artificielle fait l'objet d'un apprentissage pour éliminer par filtrage le bruit des signaux de mesure causé par un son interne de véhicule.

8. Procédé selon la revendication 7, dans lequel le bruit des signaux de mesure, causé par le son interne de véhicule, est représentatif du son généré par le système de divertissement du véhicule (10).

9. Procédé selon la revendication 1, dans lequel l'intelligence artificielle fait l'objet d'un apprentissage pour éliminer par filtrage le bruit des signaux de mesure, causé par une condition de route, représentatif de la condition d'un sous-sol sur lequel le véhicule (10) est en mouvement.

10. Procédé selon l'une quelconque des revendications 1 à 9, dans lequel l'intelligence artificielle fait l'objet d'un apprentissage pour déterminer les données de condition (CD) de manière telle qu'elles comprennent des informations concernant un ou plusieurs impacts sur le pare-brise (30) et/ou une propreté d'une surface du pare-brise (30) et/ou une friction de la surface du pare-brise (30) et/ou une usure d'un essuie-glace (40) du pare-brise (30).

11. Procédé selon les revendications précédentes, dans lequel le procédé comprend la fourniture d'une information à une base de données (60) externe au véhicule (10) selon les données de condition (CD), dans lequel l'information comprend une information de localisation qui a une relation temporelle par rapport aux données de mesure (MD).

12. Procédé selon les revendications précédentes, dans lequel le procédé comprend la fourniture des données de mesure (MD) sur la base de signaux de mesure provenant d'au moins quatre capteurs piézo-électriques (21, 22, 23, 24), quatre des au moins quatre capteurs piézo-électriques (21, 22, 23, 24) étant respectivement mécaniquement couplés à une zone du pare-brise (30) dans des coins du pare-brise (30).

13. Dispositif (50) pour faire fonctionner un véhicule (10), comprenant au moins deux capteurs piézo-électriques (21, 22) mécaniquement couplés à un pare-brise du véhicule de manière espacée l'un de l'autres, dans lequel les au moins deux capteurs piézo-électriques (21, 22) sont mécaniquement couplés au pare-brise de manière telle que les signaux de mesure soient représentatifs de vibrations du pare-brise, dans lequel le dispositif (50) est conçu pour exécuter le procédé selon l'une quelconque des revendications 1 à 12.

14. Programme d'ordinateur pour faire fonctionner un véhicule (10), comprenant des instructions pour faire en sorte que le dispositif de la revendication 13 exécute les étapes du procédé selon l'une quelconque des revendications 1 à 12, par le biais de son exécution sur un dispositif de traitement de données.

15. Produit programme d'ordinateur, comprenant un code de programme exécutable, dans lequel le code de programme exécute des instructions pour faire en sorte que le dispositif de la revendication 13 exécute les étapes du procédé selon l'une quelconque des revendications 1 à 12, par le biais d'exécution sur un dispositif de traitement de données.
